# EUROPEAN PATENT APPLICATION

(11) **EP 2 536 069 A1**
(43) Date of publication of application: **19.12.2012**
(21) Application number: 10845779.7
(22) Date of filing: 11.08.2010
(51) Int. Cl.: H04L 12/46

(54) **IN-VEHICLE-DATA RELAYING DEVICE AND VEHICLE CONTROL SYSTEM**

(30) Priority: 09.02.2010 JP 2010026452
(71) Applicant: Hitachi Automotive Systems, Ltd., Hitachinaka-shi Ibaraki 312-8503 (JP)
(72) Inventor: ISHIGOOKA Tasuku, Hitachi-shi Ibaraki 319-1292 (JP); NARISAWA Fumio, Hitachi-shi Ibaraki 319-1292 (JP); MIYAKE Junji, Hitachinaka-shi Ibaraki 312-8503 (JP); NAGAURA Wataru, Hitachinaka-shi Ibaraki 312-8503 (JP)
(74) Representative: MERH-IP Matias Erny Reichl Hoffmann
(86) International application number: PCT/JP2010/063637
(87) International publication number: WO 2011/099187

(57) **Abstract**

An object of the present invention is to provide a technique making it possible to transmit and receive communication data among multiple types of networks in an in-vehicle network having the networks therein. An in-vehicle-data relaying device according to the present invention relays communication data to a different in-vehicle-data relaying device when the transmission destination of the communication data is a network not directly connected to the in-vehicle-data relaying device.

## Description

### TECHNICAL FIELD

The present invention relates to a technique of relaying data in an in-vehicle network.

### BACKGROUND ART

Many of recent vehicle control systems each include: ECUs (Electronic Control Units) configured to operate electronic vehicle controllers; and an in-vehicle LAN (Local Area Network) enabling communications among the multiple ECUs. A network widely used as one of the in-vehicle LANs is a CAN (Controller Area Network).

Meanwhile, provision of more advanced functions to a vehicle and a vehicle control system increases the volume of data flowing in the in-vehicle network. For this reason, a communication band of the CAN is running short. Hence, FlexRay (registered trademark) having a larger communication capacity than the CAN has been increasingly employed in recent years. FlexRay has a transfer rate about ten times higher than the CAN, and is thus capable of large-volume data communication.

The vehicle control system is generally a system in which multiple ECUs control a vehicle in cooperation while communicating with each other via an in-vehicle network. The in-vehicle network includes multiple types of networks such as the CAN which is an event-driven network configured to transmit data non-periodically and FlexRay which is a time-driven network configured to transmit data periodically.

Communication among the ECUs through such networks of multiple types requires an in-vehicle-data relaying device (GW ECU: gateway ECU) configured to absorb a difference in the communication method or the like among the networks and to relay communication data in the networks.

A system configuration of the vehicle control system varies depending on the vehicle type, a product shipping destination, functions selected by a user in purchasing an automobile, and the like, and thus communication route information to be set up in the in-vehicle-data relaying device needs to be adjusted individually. Even using the same ECUs, different types of vehicles, for example, have a difference in the networks constituting the system and a difference in the layout of ECUs connected to the networks. For this reason, communication routes among the ECUs are changed. The in-vehicle-data relaying device needs adjustment of communication route information accordingly.

The change of the communication route information requires modification and recompilation of a program for the in-vehicle-data relaying device. This requires man-hours to modify and compile the program, man-hours to verify correct setting, and the like, thus placing a large burden. Hence, there is a demand that even if communication route information to be set up in an in-vehicle-data relaying device is changed, the communication route information of the in-vehicle-data relaying device be able to be changed without modifying a program for the in-vehicle-data relaying device.

Patent Document 1 cited below proposes a technique of changing communication route information without changing a program for an in-vehicle-data relaying device. In the document, the in-vehicle-data relaying device itself inquires ECUs of the presence or absence of data to be relayed. When holding data to be relayed by the in-vehicle-data relaying device, each of the ECUs returns a message including the data and an identifier of the data. The in-vehicle-data relaying device newly registers or updates a correspondence between the identifier of the data and a relay destination, as communication route information.

Patent Document 2 cited below proposes a technique in which ECUs request an in-vehicle-data relaying device to newly register or update communication route information.

Meanwhile, in a TCP/IP network, a node transmits a message while designating a transmission destination IP address for data to be transmitted, and a router receiving the message relays the message according to the transmission destination IP of the message.

### CITATION LIST

### PATENT LITERATURE

Patent Document 1: Japanese Patent Publication (Kokai) No. 2006-319540
Patent Document 2: Japanese Patent Publication (Kokai) No. 2005-341495

### SUMMARY OF INVENTION

### TECHNICAL PROBLEM

When a network has a star-type structure with the in-vehicle-data relaying device located in the center, the technique described in Patent Document 1 above makes it possible to register or update the communication route information without changing the program for the in-vehicle-data relaying device.

However, recent in-vehicle networks need to handle increased data volume, and may have insufficient throughput if employing the star-type network structure. Hence, it is conceivable to introduce a high-speed network into part of the in-vehicle network to improve the throughput. In this case, in order to absorb the difference or the like in the communication method among the networks, an in-vehicle-data relaying device needs to be provided at an input-output port of each network.

In addition, although the star-type network requires only a single in-vehicle-data relaying device to absorb the difference or the like in communication method between the networks before and after relaying, a network having multiple types of networks connected in multiple levels requires relay of communication data among in-vehicle-data relaying devices. For this reason, processing such as converting the format of communication data is also required in multiple levels.

An in-vehicle-data relaying device assumed to be used in the star-type network structure is not intended to relay data with other in-vehicle-data relaying devices, and may lack a definition of a message format for the relay. Further, the in-vehicle-data relaying device does not have a message format for relaying communication route information transmitted by an ECU to a different in-vehicle-data relaying device. Accordingly, if multiple types of networks are connected via in-vehicle-data relaying devices based on the technique described in Patent Document 1 above, the communication route information cannot be relayed in a section between the in-vehicle-data relaying devices. As a result, the communication route information cannot be newly registered or updated unless the programs for the in-vehicle-data relaying devices are changed.

With the technique described in Patent Document 2 above, even if the ECUs request the in-vehicle-data relaying device to newly register or update communication route information, the request cannot be relayed to a different in-vehicle-data relaying device. Thus, Patent Document 2 has the same problem as that of Patent Document 1.

Meanwhile, in the routing technique used in the TCP/IP network, a correspondence between a transmission source node and a transmission destination node is described for each node. On the other hand, in the in-vehicle network, a destination is not designated for each node but is designated for each network. When a routing table is described in the in-vehicle network in such a manner that a communication route is designated for each node, communication route information needs to be set up again depending on a vehicle type. Thus, a development load is increased.

The present invention has been made to solve the problems as described above. An object thereof is to provide a technique making it possible to transmit and receive communication data among multiple types of networks in an in-vehicle network having the networks therein.

### SOLUTION TO PROBLEM

An in-vehicle-data relaying device according to the present invention relays communication data to a different in-vehicle-data relaying device when the transmission destination of the communication data is a network not directly connected to the in-vehicle-data relaying device.

### ADVANTAGEOUS EFFECTS OF INVENTION

The in-vehicle-data relaying device according to the present invention can relay the communication data between the in-vehicle-data relaying devices. Thereby, even if multiple types of networks are connected in a structure other than a star-type structure, ECUs belonging to different networks can communicate with each other.

### BRIEF DESCRIPTION OF DRAWINGS

Fig. 1 is a network configuration diagram of a vehicle control system 1000 according to Embodiment 1.
Fig. 2 is a functional block diagram of each of in-vehicle-data relaying devices 100.
Fig. 3 is a functional block diagram of a topology configuration device 200.
Fig. 4 is a diagram showing a structure of a topology information table 400 and an example of data therein, the topology information table 400 being stored in a topology information storage area 222 of the topology configuration device 200.
Fig. 5 is a diagram showing how the topology configuration device 200 transmits topology information in the first row in Fig. 4 to the in-vehicle-data relaying devices 100.
Fig. 6 is a table showing a structure of a routing table updated in Step (3) in Fig. 5 and an example of data therein.
Fig. 7 is a table showing a structure of a routing table updated in Step (4) in Fig. 5 and an example of data therein.
Fig. 8 is a flowchart showing an operation flow of the topology configuration device 200.
Fig. 9 is a flowchart showing an operation flow of each in-vehicle-data relaying device 100.
Fig. 10 is an operation flow showing details of Step S910 in Fig. 9.
Fig. 11 is a table showing an example of data in the topology information table 400 in a first example of Embodiment 2.
Fig. 12 is a diagram showing a process of relaying communication data in the first example of Embodiment 2.
Fig. 13 is a table showing an example of data obtained after updating a routing table of an in-vehicle-data relaying device 100c according to topology information shown in Fig. 11.
Fig. 14 is a table showing an example of data obtained after updating a routing table of an in-vehicle-data relaying device 100b according to the topology information shown in Fig. 11.
Fig. 15 is a table showing an example of data in the topology information table 400 in a second example of Embodiment 2.
Fig. 16 is a diagram showing a process of relaying communication data in the second example of Embodiment 2.
Fig. 17 is a table showing an example of data obtained after updating a routing table of the in-vehicle-data relaying device 100c according to topology information shown in Fig. 15.
Fig. 18 is a table showing an example of data obtained after updating a routing table of the in-vehicle-data relaying device 100b according to the topology information shown in Fig. 15.
Fig. 19 is a table showing First Modification of the topology information table 400.
Fig. 20 is a table showing Second Modification of the topology information table 400.
Fig. 21 is a table showing Third Modification of the topology information table 400.
Fig. 22 is a table showing Fourth Modification of the topology information table 400.
Fig. 23 is a table showing First Modification of the routing table.
Fig. 24 is a table showing Second Modification of the routing table.
Fig. 25 is a table showing Third Modification of the routing table.
Fig. 26 is a table showing Fourth Modification of the routing table.
Fig. 27 is a table showing Fifth Modification of the routing table.
Fig. 28 shows a data frame 2001 based on a communication protocol of a CAN.
Fig. 29 shows a FlexRay frame 2101 based on a communication protocol of FlexRay.
Fig. 30 is a network configuration diagram of a vehicle control system 1000 according to Embodiment 6.
Fig. 31 is a functional block diagram of an engine control ECU 1310.
Fig. 32 is a functional block diagram of a meter-equipped ECU 1110.
Fig. 33 is a network configuration diagram of a vehicle control system 1000 according to Embodiment 7.
Fig. 34 is a network configuration diagram of a vehicle control system 1000 according to Embodiment 8.

### DESCRIPTION OF EMBODIMENTS

### <Embodiment 1>

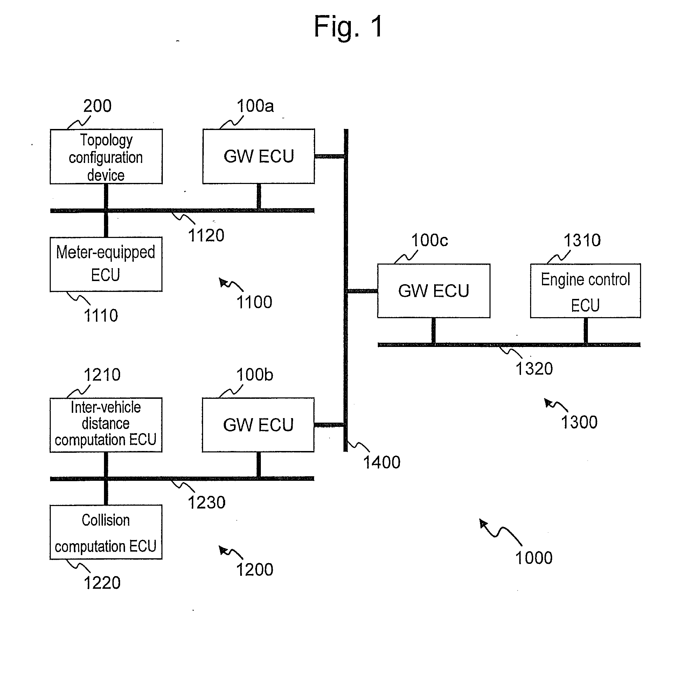

Fig. 1 is a network configuration diagram of a vehicle control system 1000 according to Embodiment 1 of the present invention. A vehicle control system 1000 has a configuration in which one or more ECUs (electronic control units) configured to control an operation of a vehicle are connected through networks. Each ECU controls units of the vehicle and communicates with the other ECUs as necessary.

The vehicle control system 1000 includes a body control subsystem 1100, an inter-vehicle distance control subsystem 1200, and an engine control subsystem 1300. The subsystems are connected to each other via a backbone network 1400 and in-vehicle-data relaying devices 100a, 100b, and 100c arranged for the respective subsystems. The backbone network 1400 is a high-speed network such as a FlexRay network. These networks form an in-vehicle network.

The in-vehicle-data relaying devices 100a, 100b, and 100c have the same configuration except the contents of routing tables to be described later. Thus, these devices will be hereinafter collectively referred to as the in-vehicle-data relaying device 100.

The body control subsystem 1100 includes the in-vehicle-data controller 100a and a meter-equipped ECU 1110. These devices are connected to each other through a body control CAN 1120.

The in-vehicle-data controller 100a relays communication data between the body control subsystem 1100 and the other subsystems. The meter-equipped ECU 1110 displays inter-vehicle distance information on a meter. In addition, when communication route information is set in each in-vehicle-data relaying device 100, a topology configuration device 200 is connected to the body control CAN 1120. The topology configuration device 200 will be described later.

The inter-vehicle distance control subsystem 1200 includes the in-vehicle-data controller 100b, an inter-vehicle distance computation ECU 1210, and a collision computation ECU 1220. These devices are connected to each other through an inter-vehicle distance control CAN 1230.

The in-vehicle-data controller 100b relays communication data between the inter-vehicle distance control subsystem 1200 and the other subsystems. The inter-vehicle distance computation ECU 1210 is provided with an inter-vehicle distance sensor such as a millimeter-wave radar. The inter-vehicle distance computation ECU 1210 calculates an inter-vehicle distance by using the sensor and transmits inter-vehicle distance information to the inter-vehicle distance control CAN 1230. The collision computation ECU 1220 computes whether or not the vehicle is going to collide on the basis of a vehicle speed and the inter-vehicle distance information received from the inter-vehicle distance control CAN 1230.

The engine control subsystem 1300 includes the in-vehicle-data controller 100c and an engine control ECU 1310. These devices are connected to each other through an engine control CAN 1320.

The in-vehicle-data controller 100c relays communication data between the engine control subsystem 1300 and the other subsystems. In addition to processing of controlling an engine, the engine control ECU 1310 calculates a vehicle speed and transmits vehicle speed information to the engine control CAN 1320.

Since the CAN and the FlexRay use different communication protocols, communication between the networks requires communication data to be relayed while one of the communication protocols is converted. The in-vehicle-data relaying device 100 has this role.

Meanwhile, even if the same communication protocol is used in a network connecting ECUs in one of the subsystems and a network connecting the subsystems, the networks might have different transfer rates. In addition, even if networks are of the same type, there is a case in which a network is intentionally divided into multiple networks to reduce a communication load on a communication bus. Thus, even when communication is performed between networks using the same communication protocol, an in-vehicle-data relaying device may still be required. For example, even when a CAN is used in both of the network connecting the ECUs in one of the subsystems and the network connecting the subsystems, the in-vehicle-data relaying device 100 is still required.

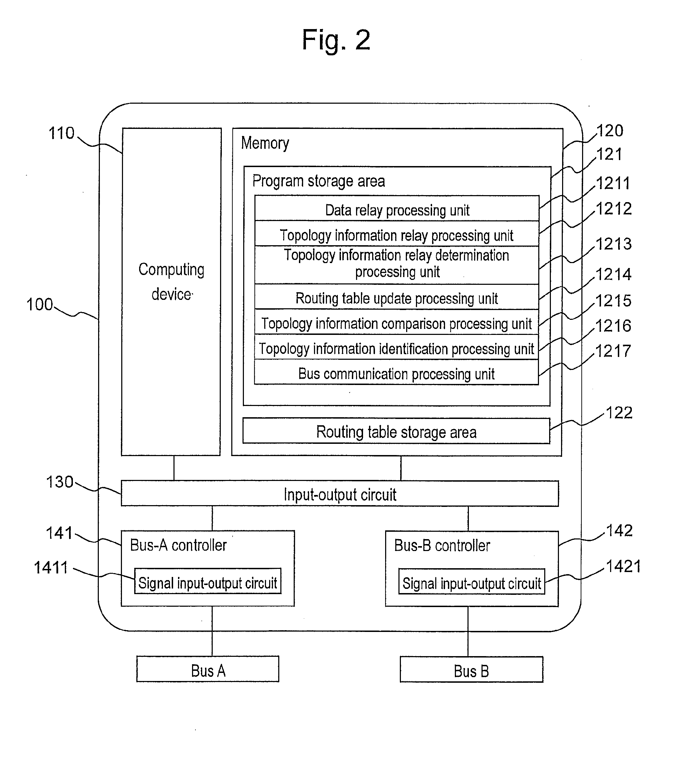

Fig. 2 is a functional block diagram of the in-vehicle-data relaying device 100. The in-vehicle-data relaying device 100 includes a computing device 110, a memory 120, an input-output circuit 130, a bus-A controller 141, and a bus-B controller 142.

The computing device 110 reads programs to be described later from a program storage area 121 of the memory 120 and executes operations thereof. The computing device 110 also reads communication route information from a routing table stored in a routing table storage area 122 of the memory 120 or writes new communication route information therein.

The memory 120 includes the program storage area 121 and the routing table storage area 122.

The program storage area 121 stores a data relay processing unit 1211, a topology information relay processing unit 1212, a topology information relay determination processing unit 1213, a routing table update processing unit 1214, a topology information comparison processing unit 1215, a topology information identification processing unit 1216, and a bus communication processing unit 1217. These units are implemented as software programs. Functions of the units will be described later. Note that the units may be hereinafter explained as operation subjects for the convenience of description but the operation subject which actually executes the roles of these units is the computing device 110.

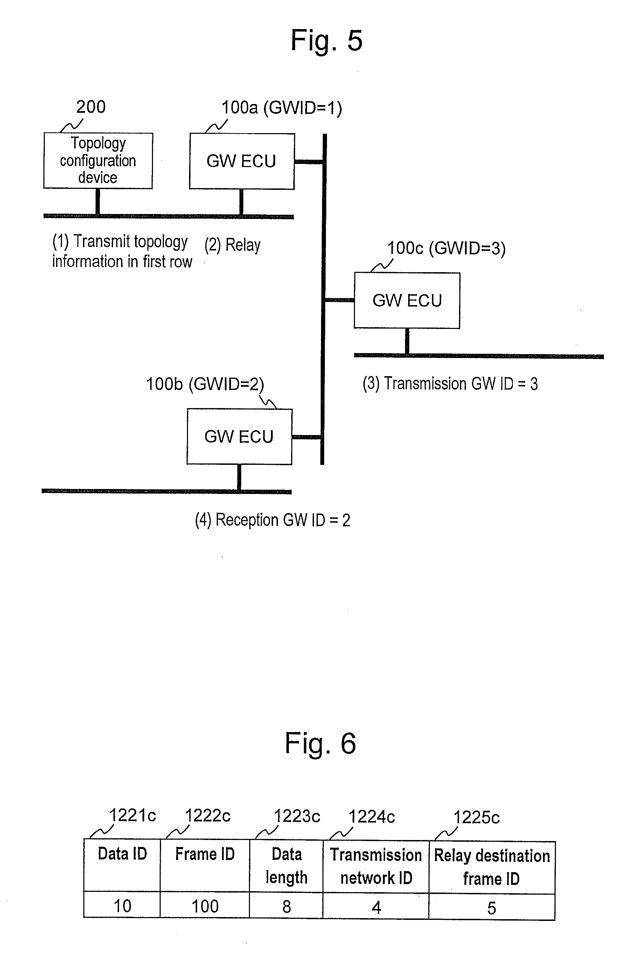

The routing table storage area 122 stores the routing tables to be described later with reference to Fig. 6 to Fig. 7.

Each of the bus-A controller 141 and the bus-B controller 142 executes processing of transmitting and receiving a communication signal between the in-vehicle-data relaying device 100 and a communication bus. To relay communication data among the networks, the in-vehicle-data relaying device 100 is connected to the multiple networks via multiple buses. Fig. 2 shows an example in which the in-vehicle-data relaying device 100 is connected to two buses, but a configuration can be employed in which the in-vehicle-data relaying device 100 is connected to three or more buses.

When communicating with a different one of the in-vehicle-data relaying devices 100 or an ECU, the computing device 110 transmits and receives communication data to and from a bus A or a bus B through the input-output circuit 130 and either the bus controller A 141 or the bus controller B 142. The bus A is connected to a CAN, for example, and the bus B is connected to the backbone network 1400, for example. A connection target of each bus controller varies with an installation location of the in-vehicle-data relaying device 100. For example, in the case of the in-vehicle-data relaying device 100b, the bus A is connected to the inter-vehicle distance control CAN 1230 and the bus B is connected to the backbone network 1400.

The bus-A controller 141 includes a signal input-output circuit 1411, and the bus-B controller 142 includes a signal input-output circuit 1421. Each of the signal input-output circuits appropriately executes required processing such as digital conversion of a communication signal received from the corresponding bus.

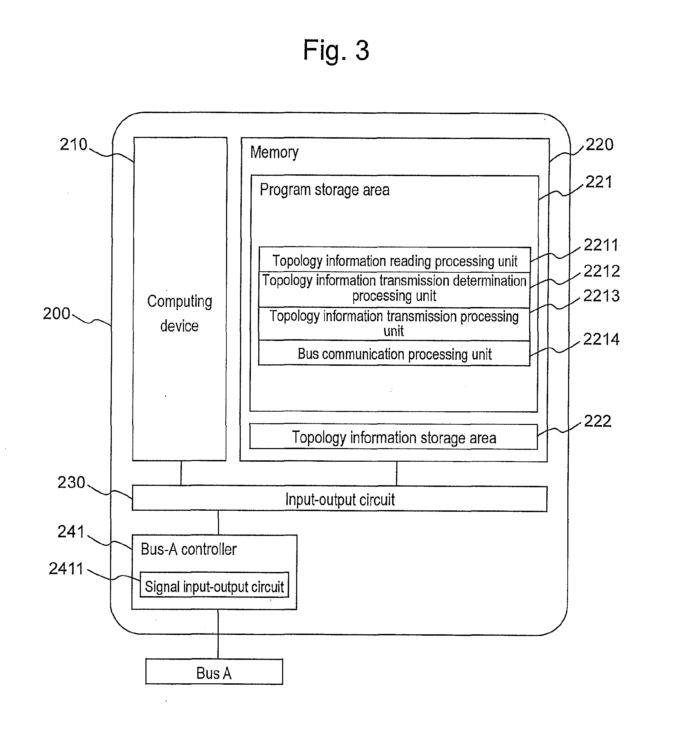

Fig. 3 is a functional block diagram of the topology configuration device 200. The topology configuration device 200 is a device for executing setting work of storing communication route information in each routing table of the corresponding in-vehicle-data relaying device 100 through the in-vehicle network in the case of initial set-up of the vehicle control system 1000, for example. The topology configuration device 200 includes a computing device 210, a memory 220, an input-output circuit 230, and a bus-A controller 241.

The computing device 210 reads programs to be described later from a program storage area 221 of the memory 220 and executes operations thereof. The computing device 210 also reads topology information stored in a topology storage area 222 of the memory 220 or writes new topology information therein.

The memory 220 includes the program storage area 221 and the topology storage area 222.

The program storage area 221 stores a topology information reading processing unit 2211, a topology information transmission determination processing unit 2212, a topology information transmission processing unit 2213, and a bus communication processing unit 2214. Functions of the units will be described later.

The units stored in the program storage area 221 are implemented as software programs to be executed by the computing device 210. Alternatively, the units may be implemented as hardware such as a circuit device implementing equivalent functions. The units may be configured as an integrated unit or configured as individual functional units. The units correspond to "relay processing units" in Embodiment 1.

Note that the units may be hereinafter explained as operation subjects for the convenience of description but the operation subject which actually executes the roles of these units is the computing device 210.

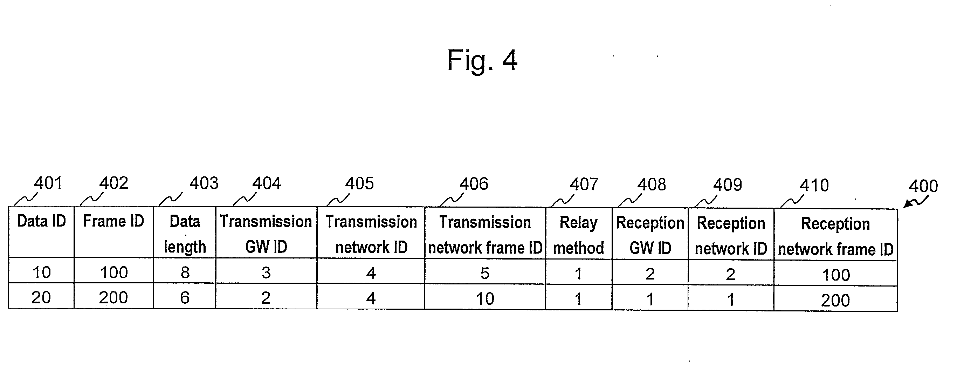

The topology information storage area 222 includes a topology information table 400 to be described later with reference to Fig. 4.

When communicating with one of the in-vehicle-data relaying devices 100 or an ECU, the computing device 210 transmits and receives communication data to and from the bus A through the input-output circuit 230 and the bus-A controller 241. A connection target of the bus controller varies with an installation location of the topology configuration device 200. For example, when the topology configuration device 200 is connected to the body control subsystem 1100, the bus A is connected to the body control CAN 1120.

The units included in the vehicle control system 1000 have heretofore been described. Next, communication within the vehicle control system 1000 will be described.

When communication data in the body control CAN 1120, the inter-vehicle distance control CAN 1230, and the engine control CAN 1320 have the same frame ID (CAN ID), the communication data hold the same data. For example, suppose a case where communication data holding a vehicle speed has a frame ID of 100 in the body control CAN 1120. In this case, in each of the inter-vehicle distance control CAN 1230 and the engine control CAN 1320, communication data holding a vehicle speed also has a frame ID of 100.

In addition, transmission of communication data from a CAN to another CAN in the network configuration shown in Fig. 1 requires the communication data to pass through the backbone network 1400. Thus, relay processing between the in-vehicle-data relaying devices 100 takes place in the course of the transmission. Since the backbone network 1400 uses a frame ID system different from that of the CANs, the in-vehicle-data relaying device 100 converts a frame ID while relaying the communication data from one of the CANs to the backbone network 1400. Note that the final transmission destination CAN needs to restore the frame ID to the frame ID before the conversion.

Each routing table stored in the routing table storage area 122 describes rules according to which the corresponding in-vehicle-data relaying device 100 performs conversion of a frame ID as described above and the like while relaying data between the CAN and the backbone network 1400. Thus, the corresponding routing table needs to be set up in order for the in-vehicle-data relaying device 100 to relay communication data between networks. The topology configuration device 200 has a role of setting up each routing table of the corresponding in-vehicle-data relaying device 100 through the in-vehicle network.

Fig. 4 is a diagram showing a structure of the topology information table 400 and an example of data therein, the topology information table 400 being stored in the topology information storage area 222 of the topology configuration device 200. The topology information table 400 is a table holding topology information pieces in respective rows. Each of the topology information pieces describes a communication route information piece to be set in the corresponding routing table of the in-vehicle-data relaying device 100. The topology information table 400 includes a data ID column 401, a frame ID column 402, a data length column 403, a transmission GW ID column 404, a transmission network ID column 405, a relay method column 407, a transmission network frame ID column 406, a reception GW ID column 408, a reception network ID column 409, and a reception network frame ID column 410.

Each topology information piece describes a transmission destination, a reception source, and a rule of converting a frame ID which are required when each in-vehicle-data relaying device 100 relays the communication data.

The transmission GW ID 404, the transmission network ID 405, and the transmission network frame ID 406 represent an identifier of the corresponding in-vehicle-data relaying device 100 in a relay source network, an identifier of the network, and a frame ID, respectively. In contrast, the reception GW ID 408, the reception network ID 409, and the reception network frame ID 410 represent an identifier of the corresponding in-vehicle-data relaying device 100 in a relay destination network, an identifier of the network, and a frame ID, respectively.

For example, a topology information piece in the first row in Fig. 4 describes rules according to which the in-vehicle-data relaying device 100 identified by transmission GW ID = 3 relays communication data identified by transmission network frame ID = 5 by using a network identified by transmission network ID = 4 as a relay source. The communication data is relayed to the in-vehicle-data relaying device 100 identified by reception GW ID = 2 by using a network identified by reception network ID = 2 as a relay destination, after a frame ID thereof is converted into reception network frame ID =100.

The relay rule and the conversion rule depend on the type of communication data (for example, communication data representing vehicle speed information, communication data representing inter-vehicle distance information or the like). The type of communication data is identified by the data ID column 401, the frame ID column 402, and the data length column 403. Each routing table holds the aforementioned conversion rules for each combination of the data ID column 401, the frame ID column 402, and the data length column 403.

A value of the relay method column 407 is fixed to "1" in Embodiment 1.

A topology information piece in one row describes both of a communication route information piece of one of the in-vehicle-data relaying devices 100 which is a relay source of communication data and a communication route information piece of one of the in-vehicle-data relaying devices 100 which is a relay destination. Accordingly, the topology information piece in one row is received by both of the in-vehicle-data relaying device 100 identified by the transmission GW ID column 404 and the in-vehicle-data relaying device 100 identified by the reception GW ID column 408. However, the in-vehicle-data relaying device 100 identified by the transmission GW ID column 404 stores only a sequence from the transmission GW ID column 404 to the transmission network frame ID column 406 in the routing table thereof, while the in-vehicle-data relaying device 100 identified by the reception GW ID column 408 stores only a sequence from the reception GW ID column 408 to the reception network frame ID column 410 in the routing table thereof.

Fig. 5 is a diagram showing how the topology configuration device 200 transmits a topology information piece in the first row in Fig. 4 to the in-vehicle-data relaying devices 100. A description is given below of steps in Fig. 5. Note that the in-vehicle-data relaying devices 100 have identifiers (GW IDs) shown in Fig. 5.

### (1) Transmitting Topology Information Piece in First Row

The topology configuration device 200 transmits the topology information piece in the first row in Fig. 4 to the body control CAN 1120. The destination is not specified.

### (2) Relaying

The in-vehicle-data relaying device 100a receives the topology information piece transmitted by the topology configuration device 200 and acquires a value of the transmission GW ID column 404 and a value of the reception GW ID column 408. Since both the values are different from the GW ID of the in-vehicle-data relaying device 100a, the in-vehicle-data relaying device 100a relays the topology information piece to different networks. The relay destination is all the networks to which the in-vehicle-data relaying device 100a is connected except the body control CAN 1120 from which the topology information piece is received. Here, the relay destination is the backbone network 1400.

### (3) Transmission GW ID = 3

The in-vehicle-data relaying device 100c receives the topology information piece relayed by the in-vehicle-data relaying device 100a and acquires the value of the transmission GW ID column 404 and the value of the reception GW ID column 408. Since the value of the transmission GW ID column 404 matches the GW ID of the in-vehicle-data relaying device 100c, the topology information piece is proved to be one which should be received by the in-vehicle-data relaying device 100c. The in-vehicle-data relaying device 100c updates a routing table thereof as in Fig. 6 to be described later on the basis of the description details of the topology information piece.

### (4) Reception GW ID = 2

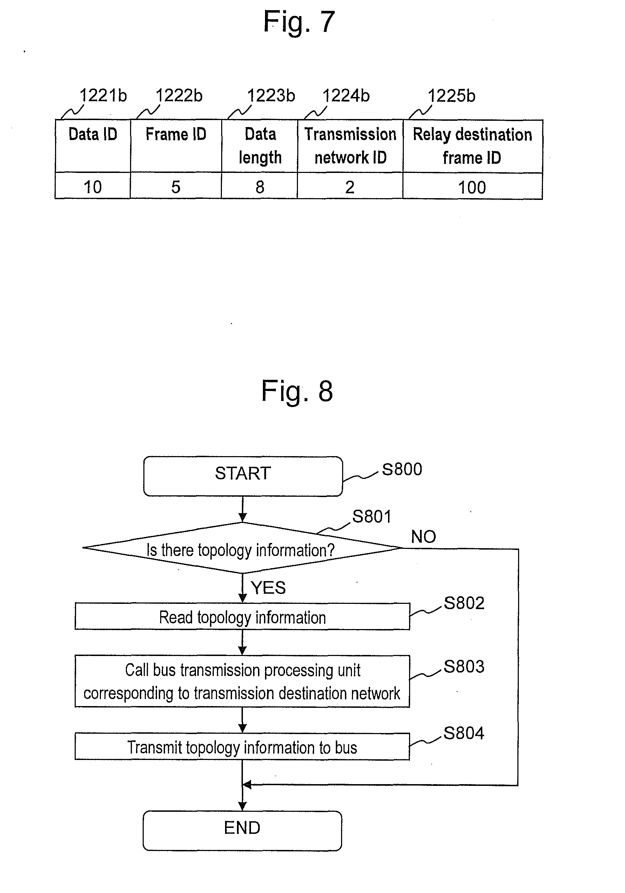

The in-vehicle-data relaying device 100b receives the topology information piece relayed by the in-vehicle-data relaying device 100a and acquires the value of the transmission GW ID column 404 and the value of the reception GW ID column 408. Since the value of the reception GW ID column 408 matches the GW ID of the in-vehicle-data relaying device 100b, the topology information piece is proved to be one which should be received by the in-vehicle-data relaying device 100b. The in-vehicle-data relaying device 100b updates a routing table thereof as in Fig. 7 to be described later on the basis of the description details of the topology information piece.

Fig. 6 is a table showing a structure of the routing table updated in Step (3) in Fig. 5 and an example of data therein. It is assumed herein that a topology information piece is newly registered in the routing table.

The topology information piece in the first row illustrated in Fig. 4 describes the rules of relaying the communication data having frame ID = 100 on the CAN from the in-vehicle-data relaying device 100c (GW ID = 3) to the in-vehicle-data relaying device 100b. Accordingly, the routing table shown in Fig. 6 describes rules of relaying the communication data on the engine control CAN 1320 from the in-vehicle-data relaying device 100c to the backbone network 1400.

A data ID column 1221c, a frame ID column 1222c, a data length column 1223c, a transmission network ID column 1224c, and a relay destination frame ID column 1225c coincide with the sequence from the data ID column 401 to the data length column 403, the transmission network ID column 405, and the transmission network frame ID column 406 in the topology information piece, respectively.

Fig. 7 is a table showing a structure of the routing table updated in Step (4) in Fig. 5 and an example of data therein. It is assumed herein that a topology information piece is newly registered in the routing table.

The routing table shown in Fig. 7 describes rules of relaying the communication data to be circulated on the inter-vehicle distance control CAN 1230 from the backbone network 1400 to the in-vehicle-data relaying device 100b.

A data ID column 1221b, a frame ID column 1222b, a data length column 1223b, a transmission network ID column 1224b, and a relay destination frame ID column 1225b coincide with the data ID column 401, the transmission network frame ID column 406, the data length column 403, the reception network ID column 409, and the reception network frame ID column 410 in the topology information piece, respectively.

Fig. 8 is a flowchart showing an operation flow of the topology configuration device 200. A description is given below of steps in Fig. 8.

### (Fig. 8: Step S800)

The computing device 210 starts the operation flow at predetermined time intervals, for example.

### (Fig. 8: Step S801)

The topology information transmission determination processing unit 2212 searches the topology information table 400 stored in the topology information storage area 222 for a topology information piece, among the topology information pieces, which has not yet been transmitted to any of the in-vehicle-data relaying devices 100. If there is a topology information piece yet to be transmitted, the processing proceeds to Step S802. If there is no topology information piece yet to be transmitted, the processing ends the operation flow.

### (Fig. 8: Step S802)

The topology information reading processing unit 2211 reads the topology information piece yet to be transmitted to any of the in-vehicle-data relaying devices 100, from the topology information table 400.

### (Fig. 8: Step S803)

The topology information transmission processing unit 2213 reads the bus communication processing unit 2214 for communicating with a bus connected to a transmission destination network of the topology information piece. In the example described with reference to Fig. 1, Fig. 3, and Fig. 4, the bus communication processing unit 2214 corresponding to the bus A connected to the body control CAN 1120 is read out. The topology information transmission processing unit 2213 formats the topology information piece read in Step S802 into a communication data frame and delivers the topology information piece to the bus communication processing unit 2214. At this time, the topology information transmission processing unit 2213 sets a value in a header portion for a frame ID or the like, the value indicating that the communication data represents the topology information.

### (Fig. 8: Step S804)

The bus communication processing unit 2214 transmits the topology information piece read in Step S802 to the bus. In the example described with reference to Fig. 1, Fig. 3, and Fig. 4, the topology information piece is transmitted to the body control CAN 1120 through the bus A.

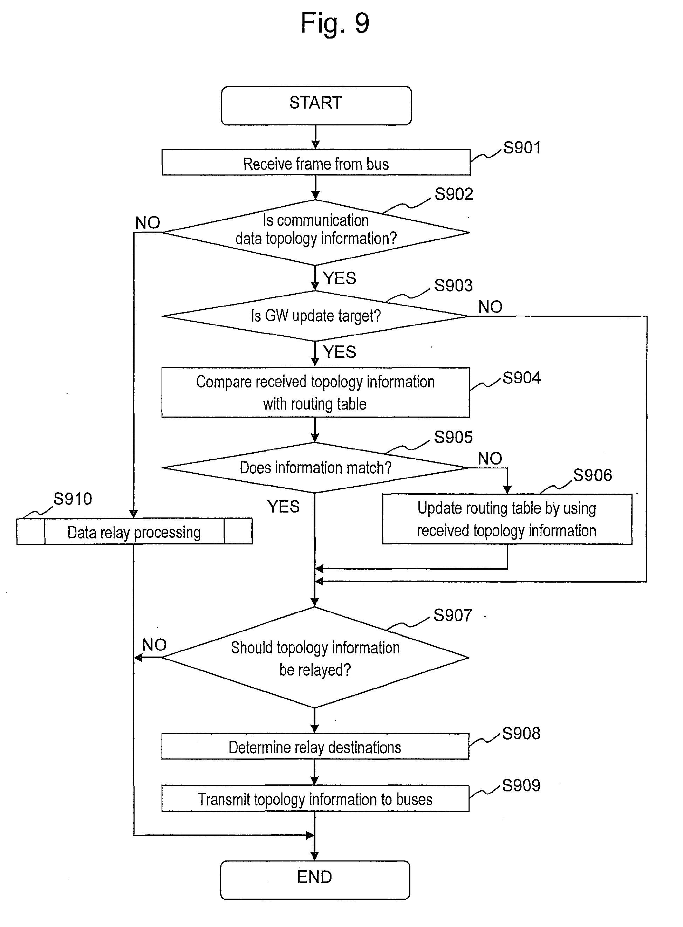

Fig. 9 is a flowchart showing an operation flow of each in-vehicle-data relaying device 100. A description is given below of steps in Fig. 9.

### (Fig. 9: Step S901)

The bus communication processing unit 1217 receives a communication data frame through an in-vehicle network and a bus to which the in-vehicle-data relaying device 100 is connected.

### (Fig. 9: Step S902)

The topology information identification processing unit 1216 determines whether or not the communication data received in Step S901 is the topology information. Specifically, the topology information identification processing unit 1216 acquires a header portion such as a frame ID of the communication data and determines whether or not the communication data is the topology information based on whether or not the value indicating the topology information is set therein. If the communication data is the topology information, the processing proceeds to Step S903. If the communication data is not the topology information, the processing proceeds to Step S910.

### (Fig. 9: Step S903)

The topology information comparison processing unit 1215 acquires the transmission GW ID column 404 and the reception GW ID column 408 of the topology information piece received in Step S901 and determines whether or not the topology information piece is addressed to the in-vehicle-data relaying device 100. In the example described with reference to Fig. 4 and Fig. 5, each of the in-vehicle-data relaying devices 100b and 100c determines in this step that the topology information piece is addressed to itself. When the topology information piece is addressed to the corresponding in-vehicle-data relaying device 100, the processing proceeds to Step S904. If the topology information piece is not addressed to the in-vehicle-data relaying device 100, the processing skips to Step S907.

### (Fig. 9: Step S904)

The topology information comparison processing unit 1215 compares the topology information piece received in Step S901 with each of communication route information pieces in the routing table of the in-vehicle-data relaying device 100 and thereby determines whether or not the received topology information piece has already been reflected in the routing table.

### (Fig. 9: Step S905)

If a communication route information piece showing the same contents as those of the topology information piece is already stored in the routing table, the processing skips to Step S907. If no communication route information piece showing the same contents as those of the topology information piece is stored in the routing table, the processing proceeds to Step S906.

### (Fig. 9: Step S906)

The routing table update processing unit 1214 stores the contents of the topology information piece in the routing table. If the identifier of the in-vehicle-data relaying device 100 matches the transmission GW ID column 404, the routing table update processing unit 1214 reflects the sequence from the data ID column 401 to the data length column 403, the transmission network ID column 405, and the transmission network frame ID column 406 in the routing table. If the identifier of the in-vehicle-data relaying device 100 matches the reception GW ID column 408, the routing table update processing unit 1214 reflects the sequence from the data ID column 401 to the data length column 403, the reception network ID column 409, and the reception network frame ID column 410 in the routing table.

### (Fig. 9: Step S907)

The topology information relay determination processing unit 1213 determines whether or not the topology information piece received in Step S901 should be relayed. For example, if the in-vehicle-data relaying device 100 receives the topology information piece from any of the CANs in Step S901, the topology information relay determination processing unit 1213 determines that the topology information piece should be relayed. If the in-vehicle-data relaying device 100 receives the topology information piece from the backbone network 1400, the topology information relay determination processing unit 1213 determines that the topology information piece should not be relayed. In the case where the topology information piece is relayed, the processing proceeds to Step S908. In the case where the topology information piece is not relayed, the processing ends the processing flow.

### (Fig. 9: Step S907: Supplementation)

The criterion for judgment in this step depends on the configuration or the like of the in-vehicle network. In the network configuration shown in Fig. 1, the CANs are connected to each other via the backbone network 400. Thus, if a topology information piece is received from the backbone network 1400, the topology information piece can be deemed as the one having already been relayed from a different one of the in-vehicle-data relaying devices 100. The above-described criterion for judgment is used for this reason.

### (Fig. 9: Step S908)

The topology information relay processing unit 1212 determines a relay destination to which the topology information piece is relayed. The topology information piece should be distributed to all the in-vehicle-data relaying devices 100. Accordingly, the topology information relay processing unit 1212 determines all the networks, which are other than the network from which the topology information piece is received, as the relay destination of the topology information piece in Step S901.

### (Fig. 9: Step S909)

The bus communication processing unit 1217 outputs the topology information piece to the buses connected to the relay destination networks determined in Step S908. The topology information piece is transmitted to each relay destination network via each corresponding bus.

### (Fig. 9: Step S910)

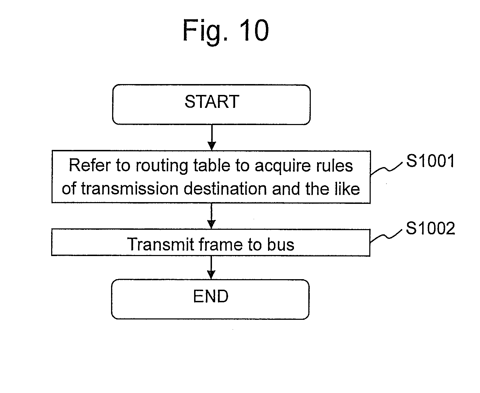

The computing device 110 executes data relay processing to be described below with reference to Fig. 10.

Fig. 10 represents an operation flow showing the details of Step S910 in Fig. 9. A description is given below of steps in Fig. 10.

### (Fig. 10: Step S1001)

The data relay processing unit 1211 searches the routing table for a communication route information piece corresponding to the communication data received in Step S901 by using key terms including a data ID, a frame ID, and the like in the communication data. For example, according to the example of data described with reference to Fig. 6, the relay destination network ID = 4 and the relay destination frame ID = 5 can be acquired. The data relay processing unit 1211 determines the relay destination of the communication data based on these relay rules and converts the frame ID and the like as necessary.

### (Fig. 10: Step S1002)

The bus communication processing unit 1217 outputs the communication data to the bus connected to the relay destination network determined in Step S1001. The communication data is transmitted to the relay destination network via the bus.

The communication within the vehicle control system 1000 has been described.

As described above, according to Embodiment 1, when communication data received by any of the in-vehicle-data relaying devices 100 is general communication data which is not topology information, the in-vehicle-data relaying device 100 refers to its routing table to acquire rules of a relay destination, frame ID conversion, and the like. In particular, when the communication data is relayed through multiple networks, the in-vehicle-data relaying device 100 converts a frame ID thereof into a frame ID to be used in a network through which the communication data passes in the course of communication. This makes it possible to relay the communication data through multiple networks, and thus the present invention is suitable for a case of relaying communication data among the in-vehicle-data relaying devices 100 in an in-vehicle network formed by using multiple types of networks.

In addition, according to Embodiment 1, the topology configuration device 200 transmits a topology information piece for updating the routing table of each in-vehicle-data relaying device 100 through the in-vehicle network. Each in-vehicle-data relaying device 100 updates the routing table thereof by using the topology information piece. This can enhance work efficiency for setting the routing table. In addition, relaying the topology information piece through the networks makes it possible to update the routing table through the in-vehicle network even in the in-vehicle network having the multiple types of networks by distributing the topology information piece to the in-vehicle-data relaying devices 100.

Moreover, according to Embodiment 1, each in-vehicle-data relaying device 100 acquires values of the transmission GW ID column 404 and the reception GW ID column 408 of the topology information piece and determines whether or not the topology information piece is addressed to itself. If the topology information piece is addressed to itself, the in-vehicle-data relaying device 100 updates the routing table by using the topology information piece. If the topology information piece is not addressed to itself, the in-vehicle-data relaying device 100 relays the topology information piece to the other in-vehicle-data relaying devices 100. Thereby, the topology configuration device 200 can collectively update the routing tables of the in-vehicle-data relaying devices 100 by using a small number of topology information pieces instead of individually delivering the topology information pieces to the in-vehicle-data relaying devices 100.

Further, according to Embodiment 1, communication data holding a topology information piece holds the value indicating retention of the topology information piece, in the frame ID, for example. Thereby, each in-vehicle-data relaying device 100 can distinguish between the handling of general communication data and the handling of the topology information piece. For example, such handling is possible in which a topology information piece is excluded from routing targets and is unconditionally relayed to the other in-vehicle-data relaying devices 100. By utilizing this, the topology configuration device 200 can efficiently distribute the topology information piece to the whole in-vehicle network.

### <Embodiment 2>

In Embodiment 2 of the present invention, a description is given of a different example from Embodiment 1 regarding a technique of converting a frame ID when the data relay processing unit 1211 relays communication data by referring to a routing table thereof. In Embodiment 2, a value of the relay method column 407 in a topology information piece is any one of 1, 2, and 3. The values correspond to conversion rules different from each other.

### <Embodiment 2: Frame ID Conversion Rule 1>

A first example of Embodiment 2 describes a rule of converting a frame ID in a case of the relay method column 407 = 2.

In Embodiment 1, the reception network frame ID column 410 is provided in the topology information 400 so that a frame ID on a transmission source CAN (for example, the engine control CAN 1320) can be restored on a transmission destination CAN (for example, the inter-vehicle distance control CAN 1230). One of the in-vehicle-data relaying devices 100 identified by the value in the reception GW ID column 408 reflects the value of the reception network frame ID column 410 in the relay destination frame ID column 1225 in a routing table thereof.

In contrast, in this example, when communication data is relayed to the backbone network 1400, a frame ID on the transmission source CAN is converted into a frame ID on the backbone network 1400 while the original frame ID is embedded in a data portion of the communication data. To put it differently, in Embodiment 2, the in-vehicle-data relaying device 100 encapsulates the original communication data on the transmission source CAN by using a format of a frame on the backbone network 1400.

Upon receipt of the communication data from the backbone network 1400, the in-vehicle-data relaying device 100 on the transmission destination CAN restores the frame ID on the transmission source CAN from the data portion, sets again the restored value as a frame ID on the transmission destination CAN, and relays the communication data to the transmission destination CAN.

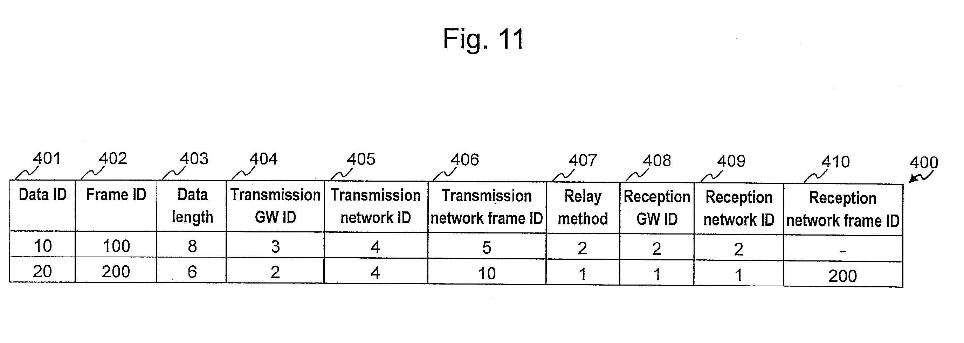

Fig. 11 is a table showing an example of data in a topology information table 400 in the first example of Embodiment 2. The topology information piece in the first row shows the relay method column 407 = 2. In this case, the frame ID on the transmission source CAN is encapsulated in the data portion of the communication data as described above, and the reception network frame ID column 410 is therefore not required.

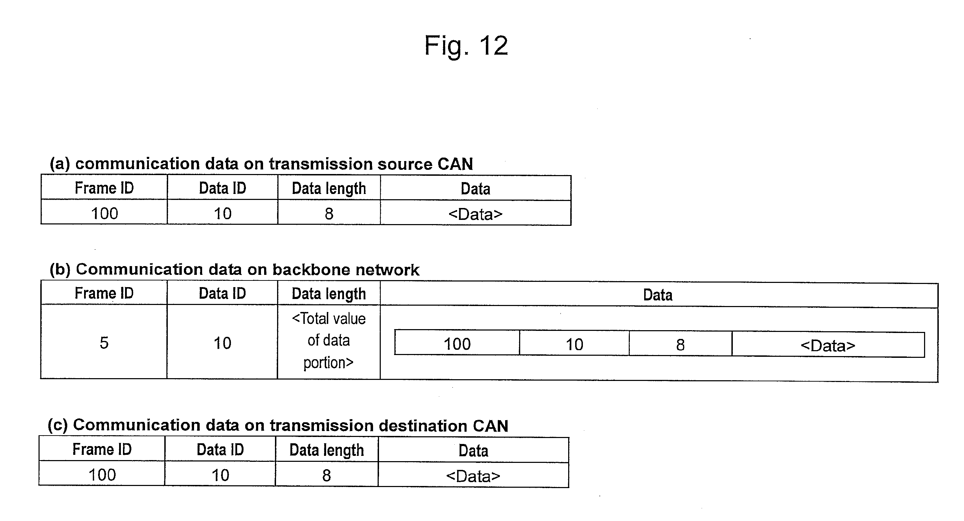

Fig. 12 is a diagram showing a process of relaying communication data in the first example of Embodiment 2. Part (a) of Fig. 12 shows communication data on the transmission source CAN. One of the in-vehicle-data relaying devices 100 which is on the transmission source CAN converts a frame ID into the frame ID on the backbone network 1400 while encapsulating the original communication data in the data portion. Then, the in-vehicle-data relaying device 100 relays the communication data to the backbone network 1400. Part (b) of Fig. 12 shows communication data on the backbone network 1400.

Upon receipt of communication data shown in Part (b) of Fig. 12 from the backbone network 1400, one of the in-vehicle-data devices 100 which is on the transmission destination CAN restores the communication data on the transmission source CAN from the data portion, generates communication data on the transmission destination CAN shown in Part (c) of Fig. 12, and relays the communication data to the transmission destination CAN.

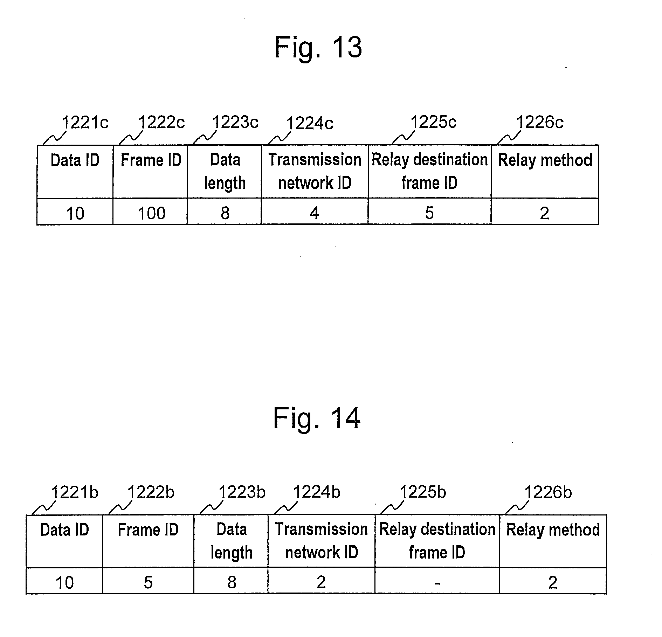

Fig. 13 is a table showing an example of data obtained after updating the routing table of the in-vehicle-data relaying device 100c according to one of the topology information pieces shown in Fig. 11. When relaying the communication data to the backbone network 1400, the in-vehicle-data relaying device 100c needs to execute the aforementioned encapsulation. Hence, a relay method column 1226c is newly provided in this example to indicate the necessity to execute the encapsulation.

Upon receipt of the topology information piece shown in Fig. 11, the in-vehicle-data relaying device 100c sets a value of the relay method column 1226c in addition to the values described in Embodiment 1. The value itself is the same as that of the relay method column 407.

Fig. 14 is a table showing an example of data obtained after updating the routing table of the in-vehicle-data relaying device 100b according to the topology information piece shown in Fig. 11. In this example, the value of the relay destination frame ID column 1225b is restored from the data portion of the communication data and thus is not required.

When the value of the relay destination frame ID column 1225b is not set, the in-vehicle-data relaying device 100b restores the frame ID on the relay destination network and the like from the data portion of the received communication data. In addition, a relay method column 1226b may be newly provided to set the same value as that of the relay method column 407 in order to clarify the fact that the communication data is encapsulated.

### <Embodiment 2: Frame ID Conversion Rule 2>

This example describes a rule of converting a frame ID in a case of the relay method column 407 = 3. In this example, a frame ID on the transmission source CAN and a frame ID on the transmission destination CAN differ from each other. Hence, the frame ID on the transmission destination CAN is embedded in a data portion.

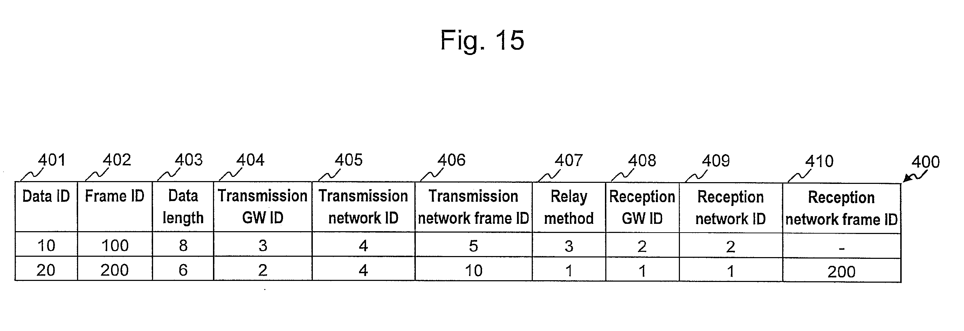

Fig. 15 is a table showing an example of data in the topology information table 400 in the second example of Embodiment 2. The topology information piece in the first row shows the relay method column 407 = 3. In this case, the frame ID on the transmission source CAN is encapsulated in the data portion of the communication data as described above, and the reception network frame ID column 410 is therefore not required.

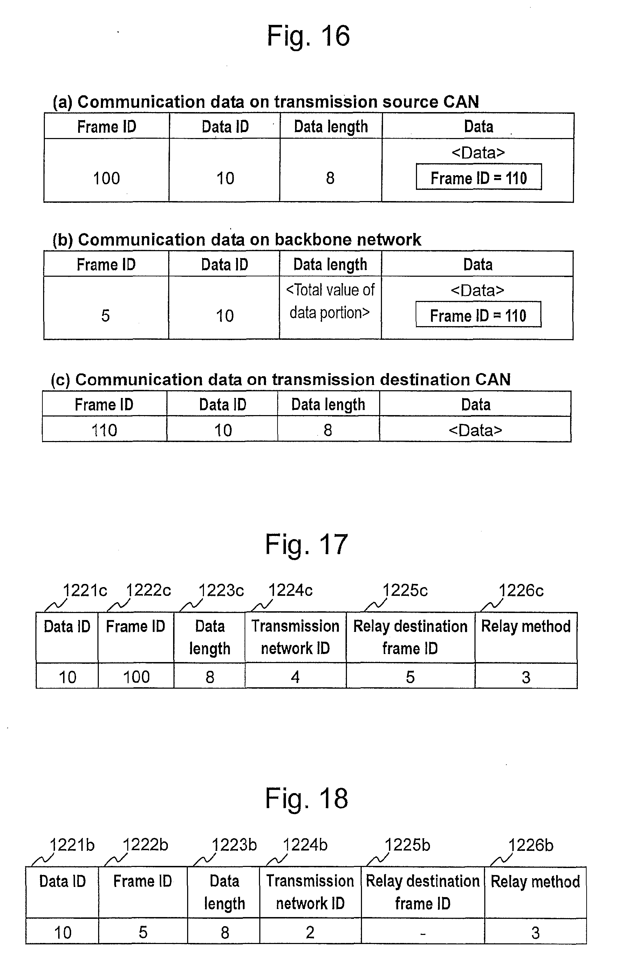

Fig. 16 is a diagram showing a process of relaying communication data in the second example of Embodiment 2. Part (a) of Fig. 16 shows communication data on the transmission source CAN. One of the in-vehicle-data relaying devices 100 which is on the transmission source CAN converts a frame ID into a frame ID on the backbone network 1400, while encapsulating a frame ID on the transmission destination CAN in a data portion. Then, the in-vehicle-data relaying device 100 relays the communication data to the backbone network 1400. Part (b) of Fig. 16 shows communication data on the backbone network 1400.

Upon receipt of communication data shown in Part (b) of Fig. 16 from the backbone network 1400, one of the in-vehicle-data devices 100 which is on the transmission destination CAN restores the frame ID on the transmission source CAN from the data portion, generates communication data on the transmission destination CAN shown in Part (c) of Fig. 16, and relays the communication data to the transmission destination CAN.

Fig. 17 is a table showing an example of data obtained after updating the routing table of the in-vehicle-data relaying device 100c according to one of the topology information pieces shown in Fig. 15. Fig. 17 is the same as Fig. 13 except that the relay method column 1226c = 3.

Fig. 18 is a table showing an example of data obtained after updating the routing table of the in-vehicle-data relaying device 100b according to the topology information piece shown in Fig. 15. Fig. 18 is the same as Fig. 14 except that the relay method column 1226b = 3.

As described above, according to Embodiment 2, communication data or a frame ID on a transmission destination network is embedded in a data portion of communication data, and the in-vehicle data device 100 on the transmission destination network restores this. This makes it possible to implement complicated conversion rules which are difficult to implement by using only routing tables.

### <Embodiment 3>

Embodiment 3 of the present invention describes modifications of a topology information piece transmitted by the topology configuration device 200.

### <Embodiment 3: Topology Information Modification 1>

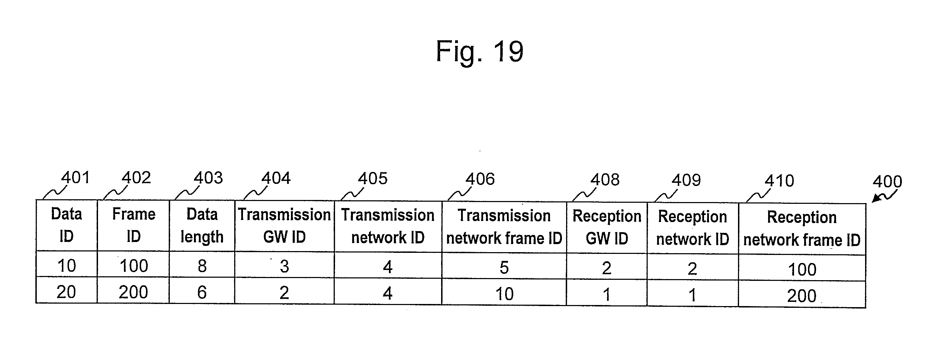

Fig. 19 is a table showing First Modification of the topology information table 400. The relay method column 407 is not required in the case of the relay processing for which the relay method has already been determined. Hence, the column is omitted in Fig. 19.

### <Embodiment 3: Topology Information Modification 2>

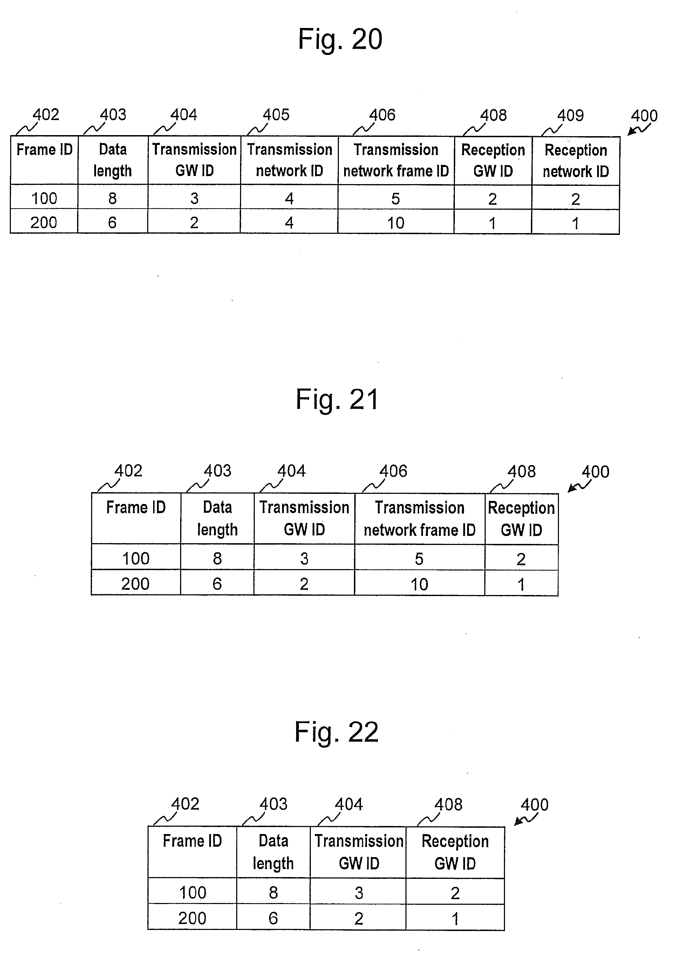

Fig. 20 is a table showing Second Modification of the topology information table 400. When a transmission destination network has a unique correspondence between the data type and the frame type, it is only necessary to provide any one of the data ID column 401, the frame ID column 402, and the reception network frame ID column 410. In Fig. 20, only the frame ID column 402 is retained and the other two are omitted.

### <Embodiment 3: Topology Information Modification 3>

Fig. 21 is a table showing Third Modification of the topology information table 400. When each in-vehicle-data relaying device 100 has a unique correspondence between a relay source network and a relay destination network, the transmission network frame ID column 406 and the reception network ID column 409 are not required. Hence, these columns are omitted in Fig. 21.

### <Embodiment 3: Topology Information Modification 4>

Fig. 22 is a table showing Fourth Modification of the topology information table 400. In Embodiment 1, FlexRay is illustrated as an example of the backbone network 1400. However, if all the networks including the backbone network 1400 are the networks of the same type, each network has a unique correspondence between the frame type and the data type. In this case, it is only necessary to provide any one of the data ID column 401, the frame ID column 402, the transmission network frame ID column 406, and the reception network frame ID column 410. In Fig. 22, only the frame ID column 402 is retained and the other three are omitted.

As described above, according to Embodiment 3, the items identifiable by other means are omitted from the topology information table 400, and an effect of reducing memory consumption is thereby obtained. Further, the number of program execution steps is reduced when the data relay processing unit 1211, the topology information comparison processing unit 1215, the routing table update processing unit 1214, and the like refer to the routing tables. Thus, an effect of reducing processing time is obtained.

### <Embodiment 4>

Embodiment 4 of the present invention describes modifications of a routing table held by each in-vehicle-data relaying device 100.

### <Embodiment 4: Routing Table Modification 1>

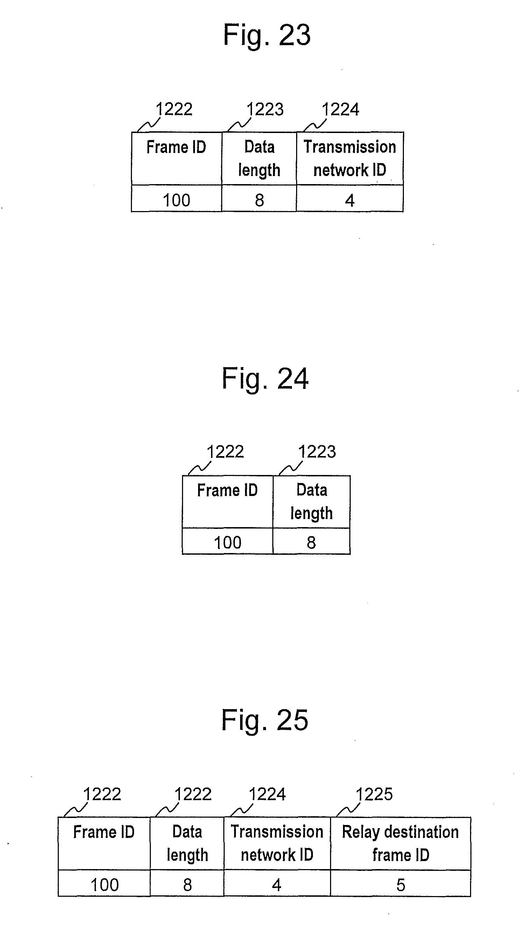

Fig. 23 is a table showing First Modification of the routing table. When a correspondence among the data ID column 1221, the frame ID column 1222, and the relay destination frame ID column 1225 is unique, it is only necessary to provide any one of these columns. In Fig. 23, only the frame ID column 1222 is retained and the other two are omitted.

### <Embodiment 4: Routing Table Modification 2>

Fig. 24 is a table showing Second Modification of the routing table. When there is only one relay destination network configured to relay communication data or when a routing table is individually provided for each of relay destination networks, the transmission network ID column 1224 is not required. Hence, in Fig. 24, the transmission network ID column 1224 is omitted from the configuration shown in Fig. 23.

### <Embodiment 4: Routing Table Modification 3>

Fig. 25 is a table showing Third Modification of the routing table. When a correspondence between the data ID column 1221 and the frame ID column 1222 is unique, it is only necessary to provide one of these columns. In Fig. 25, only the frame ID column 1222 is retained and the data ID column 1221 is omitted.

### <Embodiment 4: Routing Table Modification 4>

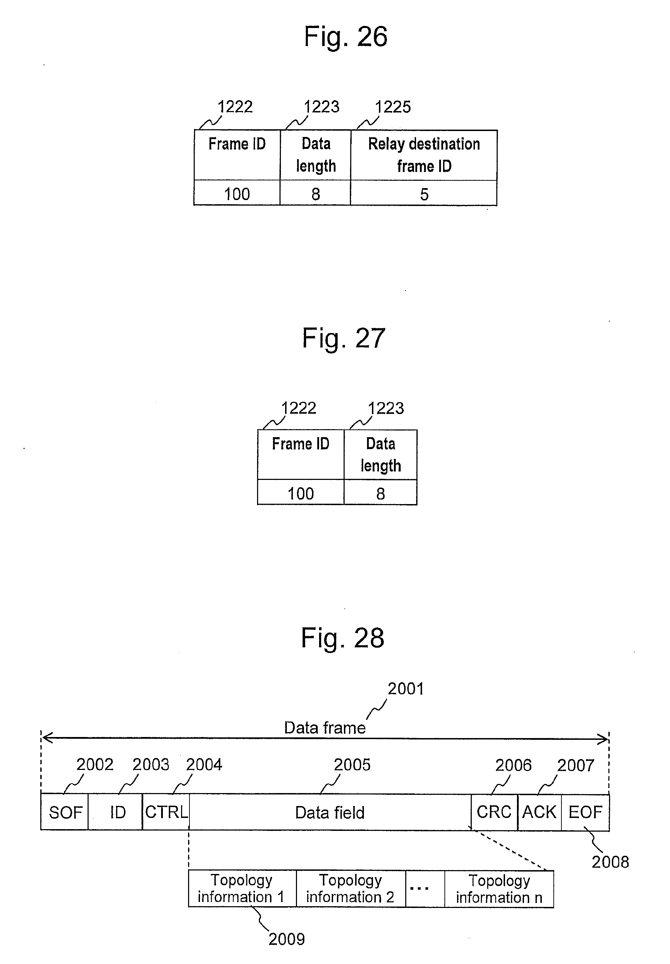

Fig. 26 is a table showing Fourth Modification of the routing table. When there is only one relay destination network or when a routing table is individually provided for each of relay destination networks, the transmission network ID column 1224 is not required. Hence, the transmission network ID column 1224 is omitted in Fig. 26.

### <Embodiment 4: Routing Table Modification 5>

Fig. 27 is a table showing Fifth Modification of the routing table. When a value of a relay destination frame ID used by the in-vehicle-data relaying device 100 is fixed in such a case that the relay destination frame ID is specified, for example, the relay destination frame ID column 1225 is not required. Hence, the column is omitted in Fig. 27.

As described above, according to Embodiment 4, the items identifiable by other means are omitted from the routing table, and an effect of reducing memory consumption is thereby obtained. Further, the number of program execution steps is reduced when the data relay processing unit 1211, the topology information comparison processing unit 1215, the routing table update processing unit 1214, and the like refer to the routing tables. Thus, an effect of reducing processing time is obtained.

### <Embodiment 5>

Embodiment 5 of the present invention describes a frame format of communication data. In addition, a description is also given of data storable in fields in a frame.

Fig. 28 shows a data frame 2001 based on a communication protocol of a CAN. The data frame 2001 includes SOF 2002 indicating the start of a frame, an identifier (ID) 2003 making the frame uniquely identifiable, CTRL 2004 indicating the size and length of the frame, a data field 2005 storing data to be transmitted, CRC 2006 for error detection of the communication data, ACK 2007 indicating that the frame is properly received, and EOF 2008 indicating the end of the frame. Topology information 2009 and control data are stored in the data field 2005.

A frame ID for transmitting topology information is decided at the time of system designing. The topology information is transmitted while being stored in a frame identified by the frame ID. For example, if a decision is made at the time of system designing that topology information is stored in a frame having a CAN frame ID taking on a value of 700 and a frame having a frame ID of the backbone network 1400 taking on a value of 20, the topology configuration device 200 stores the topology information in the frame having the CAN frame ID taking on the value of 700 and transmits the topology information to the body control CAN 1120. The in-vehicle-data relaying device 100a determines that the received frame includes the topology information based on the fact that the CAN fame ID has the value of 700.

The in-vehicle-data relaying device 100a stores the topology information in the frame having the frame ID of the backbone network 1400 frame ID taking on the value of 20. At this time, the value of the CAN frame ID may be stored together with the topology information.

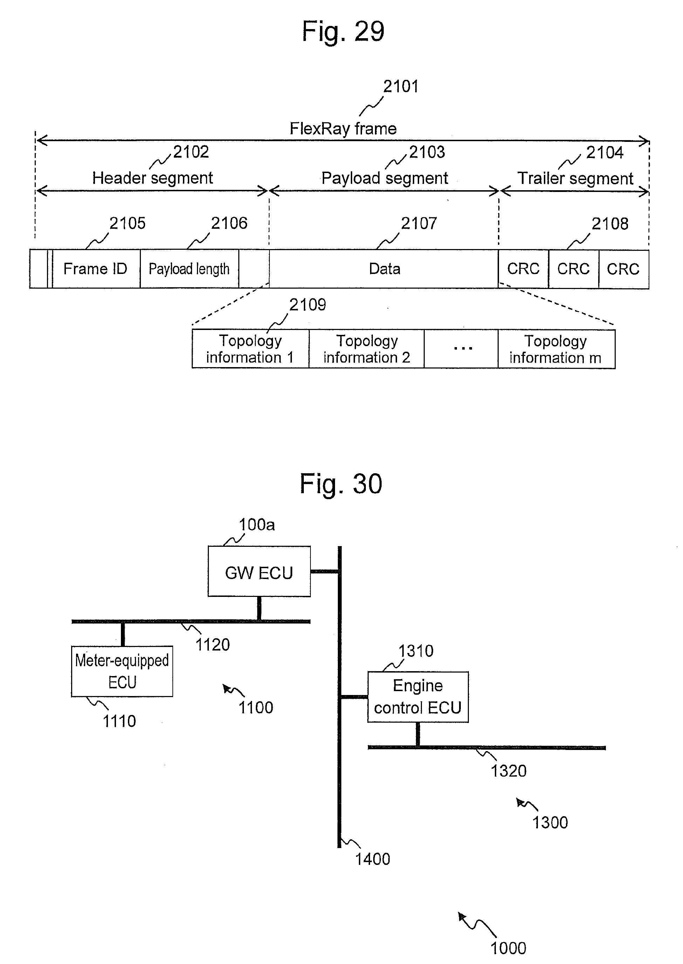

Fig. 29 shows a FlexRay frame 2101 based on a communication protocol of FlexRay. The FlexRay frame 2101 includes a header segment 2102, a payload segment 2103, and a trailer segment 2104. The header segment 2102 includes a frame ID 2105 making the frame uniquely identifiable and a payload length 2106 indicating the data length of data 2107. The payload segment 2103 includes the data 2107 storing data to be transmitted. The trailer segment 2104 includes CRC 2108 for error detection of the communication data. Topology information 2109 and control data are stored in the data 2107.

One set of the topology information may be stored in one frame of a network bus or two or more sets of the topology information may be stored therein. For example, one set of the topology information may be stored in the CAN data field 2005 or two or more sets of the topology information may be stored therein. Similarly, one set of the topology information may be stored in the FlexRay data 2107 or two or more sets of the topology information may be stored therein. Storing two or more sets of the topology information provides an effect of reducing communication load on a network.

### <Embodiment 6>

Fig. 30 is a network configuration diagram of a vehicle control system 1000 according to Embodiment 6 of the present invention. The vehicle control system 1000 includes a body control subsystem 1100 and an engine control subsystem 1300. The subsystems are connected to each other via a backbone network 1400, the in-vehicle-data relaying device 100a, and an engine control ECU 1310. The backbone network 1400 is a CAN in Embodiment 6.

The body control subsystem 1100 includes the in-vehicle-data controller 100a and a meter-equipped ECU 1110. These devices are connected to each other through the body control CAN 1120.

The in-meter ECU 1110 includes the function of the topology configuration device 200 in addition to the functions described in Embodiments 1 to 5. A detailed configuration of the meter-equipped ECU 1110 will be described later. The in-vehicle-data controller 100a is the same as those in Embodiments 1 to 5.

The engine control subsystem 1300 includes the engine control ECU 1310. The engine control ECU 1310 is connected to the engine control CAN 1320.

The engine control ECU 1310 includes the function of the in-vehicle-data controller 100c in addition to the functions described in Embodiments 1 to 5. A detailed configuration of the engine control ECU 1310 will be described later.

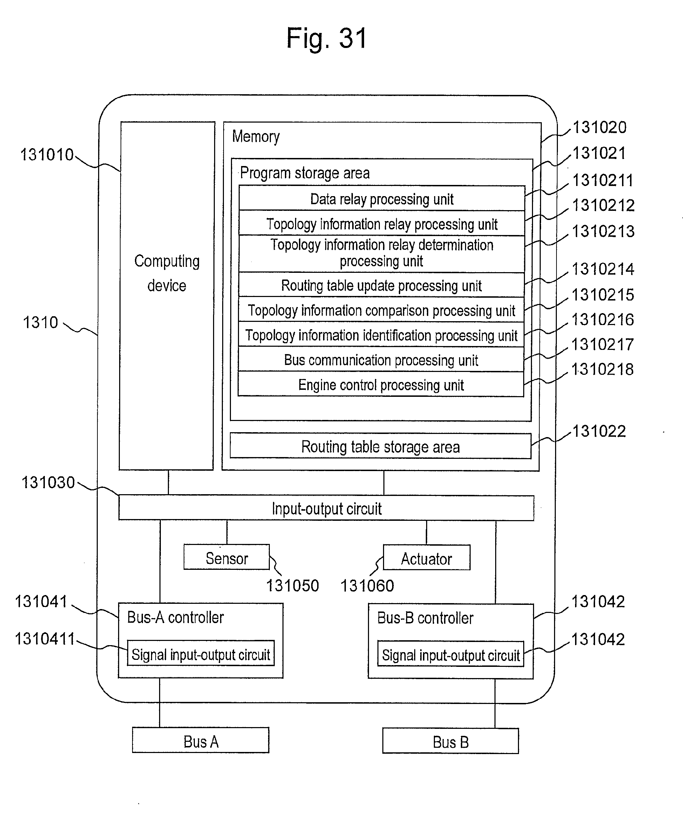

Fig. 31 is a functional block diagram of the engine control ECU 1310. In Embodiment 6, the engine control ECU 1310 has the same configuration as that of the in-vehicle-data relaying device 100 described in Embodiment 1. In addition, the engine control ECU 1310 includes an engine control processing unit 1310218, a sensor 131050, and an actuator 131060 which represent a configuration unique to the engine control ECU 1310. The engine control processing unit 1310218 executes processing of controlling the engine by using functions of the sensor 131050 and the actuator 131060.

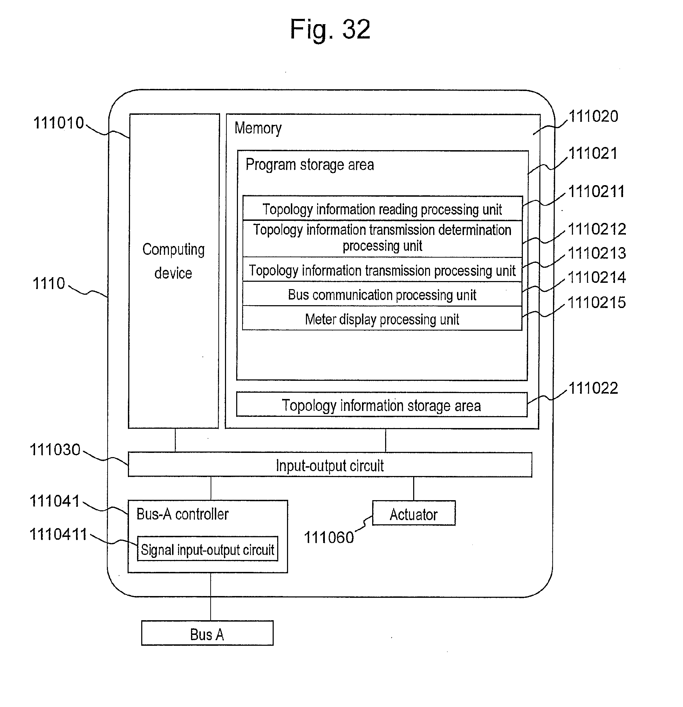

Fig. 32 is a functional block diagram of the meter-equipped ECU 1110. In Embodiment 6, the meter-equipped ECU 1110 has the same configuration as that of the topology configuration device 200 described in Embodiment 1. In addition, the meter-equipped ECU 1110 includes a meter display processing unit 1110215 and an actuator 111060 which represent a configuration unique to the meter-equipped ECU 1110. The meter display processing unit 1110215 executes processing of displaying a meter indicator by using a function of the actuator 111060.

As described above, according to Embodiment 6, the functions of the data relaying device 100 and the topology configuration device 200 are integrated into the ECUs. Thus, a smaller network load can be achieved than in a case where communication data is transmitted and received between these devices and the ECUs. In addition, providing the functions of the multiple devices to the single ECU can reduce an installation space.

### <Embodiment 7>

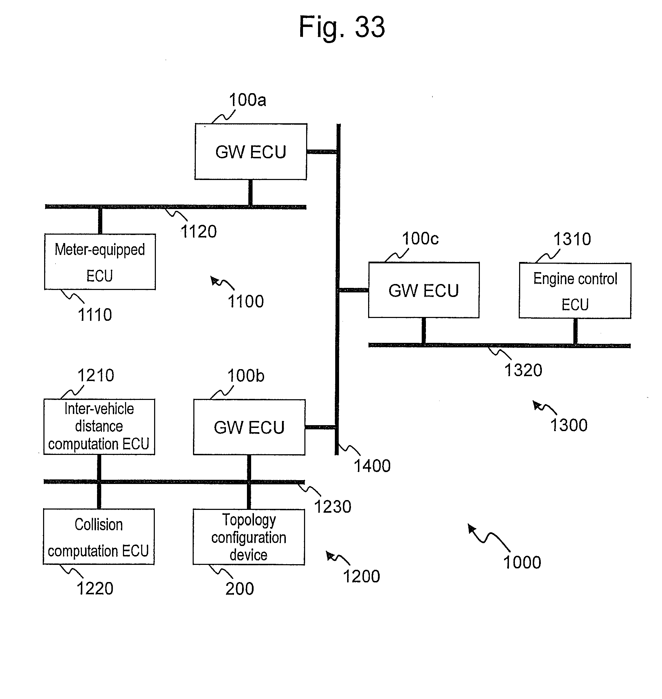

Fig. 33 is a network configuration diagram of a vehicle control system 1000 according to Embodiment 7 of the present invention. The vehicle control system 1000 according to Embodiment 7 has the same configuration as those in Embodiment 1 to 5, but is different in a point that routing tables of the in-vehicle-data relaying devices 100 have been already set in the body control subsystem 1100 and the engine control subsystem 1300.

Hence, in Embodiment 7, the topology configuration device 200 is connected to the inter-vehicle distance control subsystem 1200, and topology information is distributed only within the inter-vehicle distance control subsystem 1200. This case achieves a smaller number of times to transmit the topology information than in the case where the topology information is distributed to all the subsystems, and thus can reduce a network load. In addition, the case requires a smaller volume of the topology information table 400 in the topology configuration device 200.

### <Embodiment 8>

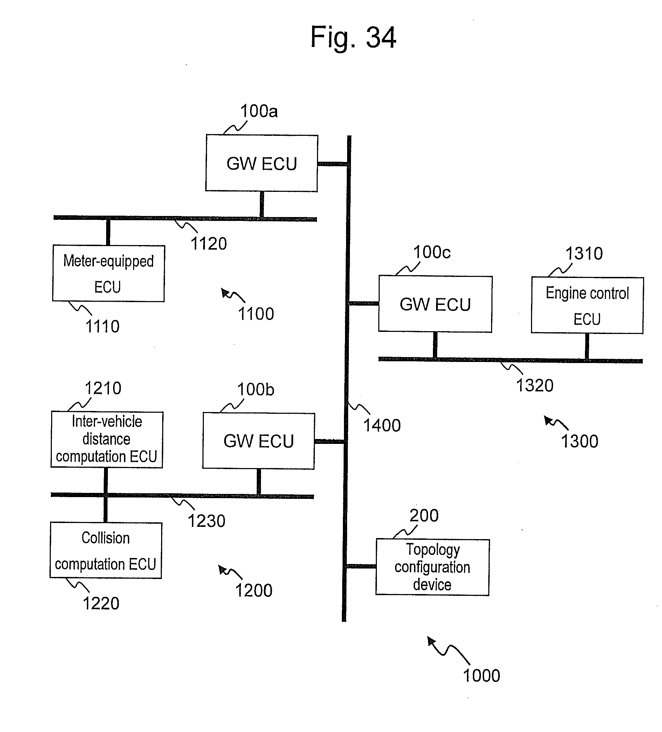

Fig. 34 is a network configuration diagram of a vehicle control system 1000 according to Embodiment 8 of the present invention. In Embodiment 8, the topology configuration device 200 is connected to the backbone network 1400. This case eliminates the need to relay the topology information among the in-vehicle-data relaying devices 100 and requires each in-vehicle-data relaying device 100 to process only a topology information piece addressed to itself. Thus, a network load can be reduced.

### REFERENCE SIGNS LIST

100a to 100c: in-vehicle-data controller, 110: computing device, 120: memory, 121: program storage area, 1211: data relay processing unit, 1212: topology information relay processing unit, 1213: topology information relay determination processing unit, 1214: routing table update processing unit, 1215: topology information comparison processing unit, 1216: topology information identification processing unit, 1217: bus communication processing unit, 122: routing table storage area, 1221: data ID column, 1222: frame ID column, 1223: data length column, 1224: transmission network ID column, 1225: relay destination frame ID column, 1226: relay method column, 130: input-output circuit, 141: bus-A controller, 1411: signal input-output circuit, 142: bus-B controller, 1421: signal input-output circuit, 200: topology configuration device, 210: computing device, 220: memory, 221: program storage area, 2211: topology information reading processing unit, 2212: topology information transmission determination processing unit, 2213: topology information transmission processing unit, 2214: bus communication processing unit, 222: topology storage area, 230: input-output circuit, 241: bus-A controller, 400: topology information table, 401: data ID column, 402: frame ID column, 403: data length column, 404: transmission GW ID column, 405: transmission network ID column, 407: relay method column, 406: transmission network frame ID column, 408: reception GW ID column, 409: reception network ID column, 410: reception network frame ID column, 1000: vehicle control system, 1100: body control subsystem, 1110: meter-equipped ECU, 1120: body control CAN, 1200: inter-vehicle distance control subsystem, 1210: inter-vehicle distance computation ECU, 1220: collision computation ECU, 1230: inter-vehicle distance control CAN, 1300: engine control subsystem, 1310: engine control ECU, 1320: engine control CAN, 1400: backbone network, 2001: data frame, 2002: SOF, 2003: identifier (ID), 2004: CTRL, 2005: data field, 2006: CRC, 2007: ACK, 2008: EOF, 2101: FlexRay frame, 2102: header segment, 2103: payload segment, 2104: trailer segment, 2105: frame ID, 2106: payload length, 2107: data, 2108: CRC, 2109: topology information

## Claims

1. An in-vehicle-data relaying device configured to relay communication data in an in-vehicle network, the in-vehicle-data relaying device comprising:
a receiving unit configured to receive communication data from the in-vehicle network;
a transmitting unit configured to transmit communication data to the in-vehicle network; and
a relay processing unit configured to determine a relay destination to which the transmitting unit is to relay the communication data,
wherein
if a transmission destination of the communication data received by the receiving unit is a network not directly connected to the in-vehicle-data relaying device, the relay processing unit determines the relay destination in such a manner as to cause the transmitting unit to relay the communication data to a different in-vehicle-data relaying device, and
if the transmission destination of the communication data received by the receiving unit is a network directly connected to the in-vehicle-data relaying device, the relay processing unit determines the relay destination in such a manner as to cause the transmitting unit to relay the communication data to the network to which the communication data is to be transmitted.

2. The in-vehicle-data relaying device according to claim 1, further comprising:
a storage unit configured to store a routing table holding communication route information describing a rule according to which the relay processing unit relays the communication data; and
a routing table update processing unit configured to update the routing table,
wherein
the receiving unit receives topology information holding the communication route information, and
the routing table update processing unit updates the routing table by using the topology information.

3. The in-vehicle-data relaying device according to claim 2, wherein
the receiving unit receives the topology information describing the communication route information and a destination thereof,
if the topology information is addressed to the in-vehicle-data relaying device, the routing table update processing unit updates the routing table by using the topology information, and
if the topology information is not addressed to the in-vehicle-data relaying device, the routing table update processing unit does not update the routing table.

4. The in-vehicle-data relaying device according to claim 2, wherein
the topology information describes a correspondence between an identifier of the communication data and the communication route information,
the routing table update processing unit searches the routing table by using the identifier of the communication data as a key to find whether or not the communication route information is already stored therein, and
if the communication route information is not stored in the routing table, the routing table update processing unit updates the routing table by using the topology information.

5. The in-vehicle-data relaying device according to claim 2, wherein
if the communication data holds the topology information, the communication data holds a topology information identifier indicating that the topology information is held, and
only if the communication data holds the topology information identifier, the routing table update processing unit updates the routing table by using the topology information.

6. The in-vehicle-data relaying device according to claim 2, wherein
if the topology information is not addressed to the in-vehicle-data relaying device, the in-vehicle-data relaying device determines the relay destination in such a manner as to cause the transmitting unit to relay the topology information to a different in-vehicle-data relaying device.

7. The in-vehicle-data relaying device according to claim 2, wherein
the topology information describes a correspondence among
a frame ID of the communication data,
first frame ID conversion instruction information indicating an instruction to convert the frame ID into a frame ID to be used on a relay-destination in-vehicle network in relaying the communication data, and
the frame ID to be used on the relay-destination in-vehicle network,
if the communication data holds the first frame ID conversion instruction information, the routing table update processing unit stores a rule of converting the frame ID of the communication data before relaying into the frame ID to be used on the relay-destination in-vehicle network, in the routing table in accordance with the correspondence described in the topology information, and
the relay processing unit converts the frame ID of the communication data before relaying into the frame ID to be used on the relay-destination in-vehicle network according to the rule described in the routing table.

8. The in-vehicle-data relaying device according to claim 2, wherein
the topology information describes a correspondence between
a frame ID of the communication data and
second frame ID conversion instruction information indicating an instruction to store the frame ID in the data portion in relaying the communication data,
the communication data holds
the frame ID of the communication data and
a data portion in which a data body of the communication data is stored,
if the communication data holds the second frame ID conversion instruction information, the routing table update processing unit stores, in the routing table, a rule of storing the frame ID before relaying in the data portion of the communication data and converting the frame ID of the communication data into a frame ID to be used on a relay-destination in-vehicle network, and
according to the rule described in the routing table, the relay processing unit stores the frame ID before relaying in the data portion of the communication data and converts the frame ID of the communication data into the frame ID to be used on the relay-destination in-vehicle network.

9. The in-vehicle-data relaying device according to claim 2, wherein
the topology information holds
a frame ID of the communication data and
third frame ID conversion instruction information indicating an instruction to store the frame ID in the data portion in relaying the communication data,
the communication data holds
the frame ID of the communication data and
a data portion in which a data body of the communication data and a frame ID to be used on a relay-destination in-vehicle network are stored,
if the communication data holds the third frame ID conversion instruction information, the relay processing unit stores, in the routing table, a rule of converting the frame ID of the communication data into the frame ID stored in the data portion, and
according to the rule described in the routing table, the relay processing unit extracts the frame ID which is stored in the data portion of the communication data and is to be used on the relay-destination in-vehicle network, and converts the frame ID of the communication data into the frame ID extracted from the data portion.

10. A vehicle control system comprising:
the in-vehicle-data relaying device according to claim 1; and
a vehicle control device configured to control a vehicle,
wherein
the in-vehicle-data relaying device and the vehicle control device are connected to each other via the in-vehicle network.
